Europäisches Patentamt

(19) European Patent Office

Office européen des brevets

(11) Publication number: **0 063 812**
**B2**

# (12) NEW EUROPEAN PATENT SPECIFICATION

(45) Date of publication of the new patent specification:
08.03.89

(21) Application number: 82103524.3

(22) Date of filling: 26.04.82

(51) Int. Cl.⁴: **D 21 H 3/68**

(54) A process for the sizing of paper.

(30) Priority: 27.04.81 IT 2139481

(43) Date of publication of application:
03.11.82 Bulletin 82/44

(45) Publication of the grant of the patent:
24.04.85 Bulletin 85/17

(45) Mention of the opposition decision:
08.03.89 Bulletin 89/10

(84) Designated Contracting States:
AT BE CH DE FR GB IT LI LU NL SE

(56) References cited:
CA-A-759 363
DE-A-2 907 354
DE-C-363 668
FR-A-2 418 297
GB-A-2 010 352
JP-B-50 000 839
JP-B-55 103 394
US-A-3 128 223
US-A-4 147 682

The file contains technical information submitted
after the application was filed and not included in
this specification

(73) Proprietor: **PRODECO S.p.A., Piazza Boldrini,**
**I-20097 San Donato Milanese (Milano) (IT)**

(72) Inventor: **Spina, Nicola, Via Triulziana 22, San**
**Donato Milanese (Milano) (IT)**

(74) Representative: **Bühling, Gerhard, Dipl.- Chem.,**
**Patentanwaltsbüro Tiedtke- Bühling- Kinne**
**Grupe- Pellmann- Grams- Struif Bavariaring 4,**
**D-8000 München 2 (DE)**

EP 0 063 812 B2

## EP 0 063 812 B1

### Description

The present invention relates to a process for the sizing of paper which comprises a precipitating step of the resin sizes.

In the so-called paper sizing, colophony based sizes, added to the fiber pulp in aqueous suspension, are precipitated by addition of a water solution of aluminum sulphate. Such a technology is however affected from several problems and drawbacks such as:

- incrustations of calcium sulphate are formed on the walls of the sizing tank;
- algae are developed and foams are formed;
- the effluent waters are polluted;
- there is corrosive action.

In the past alternative processes were proposed in which aluminum hydroxychlorides are used instead of the aluminium sulphate.

Particularly, in the German patent No. 363.668 the use of a non polymeric basic aluminium chloride salt is disclosed.

The Austrian patent No. 356.511 discloses and claims the use of aluminum polyhydroxychloride, substantially free from sulphate ions, having the formula:

$$[Al(OH)_{1.3-1.9}Cl_{1.1-1.7}]_n$$

wherein n is $\geq$ 2.

By using this precipitating agent the problem of the incrustation formation is done away with.

In the FR-A-2 418 297 a basic salt of aluminum polyhydroxychloride having the formula $Al_n(OH)_mCl_{3n-m}$ as precipitating agent for paper sizing is known, wherein the Cl/OH ratio ranges up to 2.33. The single example mentioned in the specification contains sulphate, which involves the drawbacks mentioned above. The known precipitating agent is not sufficiently effective under acidic conditions so that it cannot be used for many types of starting pulps.

JP-A-50 839 discloses a process for the preparation of basic aluminium chloride having general Formula $[Al_2(OH)_nCl_{6-n}]_m$, wherein $5 \geqslant n \geqslant 1$ and $m \leqslant 10$. This basic aluminium chloride can be placed to wide uses such as water purifying agent, size agent, raw materials of medicines and cosmetics and so forth. The examples are directed to the preparation of the compounds and, as regards the use, to a coagulation test in comparison with aluminium sulphate for water purifying treatment.

In JP-A-55 103 394 a process for reducing acid aqueous solution absorptivity of paper is disclosed wherein aluminium polyhydroxychloride is added to a fibre suspension wherein the polyhydroxychloride has the formula $[Al_2(OH)_nCl_{6-n}]_m$ wherein $1 \leqslant n \leqslant 5$ and $m \leqslant 10$. As sizing agent a synthetic sizing agent, namely a water soluble salt of alpha-carboxymethylalkenoic acid and/or of alkanoic acid is used. In comparative example 6 a conventional rosin based sizing agent is used together with an aluminium polychloride sold under the tradename TAI-PAC produced by Daimei Kagaku Kogyo K.K. for sizing paper showing that the thus obtained paper has a low resistance against acid aqueous solutions.

US-A-4 147 682 discloses an additive composition for the use in paper sizing comprising a compund having the formula: $[Al_2(OH)_nCl_{6-n}]_m$, wherein n is between 1 and 5 and $m \leqslant 10$, and a water-soluble polymer containing, as a structural unit, a vinyl monomer having -COOH and or -SO$_3$H group. With respect to the additive composition it is stated that presumably there exists a kind of cross-linking structure formed between the molecules of aluminium polyhydroxychloride and the -COOH and/or -SO$_3$H groups of the water soluble polymer which is confirmed by an increase in viscosity (compare example 6). The known additive composition exhibits a paper strength improving effect when used alone and exhibits both a favourable sizing effect and a paper strength improving effect when used for fixing various sizing agents, among others rosin size.

From US-A-3 128 223 a basic aluminium chloride of the formula $Al_2(OH)_5Cl \cdot 3 H_2O$ for the use in paper making is known.

CA-B-759 363 discloses a method for sizing paper, which comprises adding to a pulp slurry containing a conventional colyphony based sizing agent, a basic aluminium salt of the formula $Al_n(OH)_mX_{3-m}$ wherein n is a number between 1 and 20, X is a monovalent anion selected from Cl, NO$_3$, Br, I and CH$_3$COO, m is a number smaller than 3 n and the chemical equivalent ratio Al/X is from about 1,5 to about 6,0. Basic aluminium chloride is preferred showing better sizing effects than conventional aluminium sulfate.

The object of the present invention is that of providing a process by which the paper sizing efficacy is improved, especially under acidic conditions so that almost all types of starting pulps including recovered raw materials can be used.

It has been found and is the subject of the present invention that this object is achive by a process for the paper sizing, of the type in which the aqueous fiber suspension, added with a colphony based sizing agent is supplemented with a precipitating agent consisting of an aluminum polyhydroxychloride with the general formula:

$$Al_n(OH)_mCl_{3n-m}$$

characterized in that said aluminum polyhydroxychloride has a Cl/OH ratio

2

$\left(\frac{3n\text{-}m}{m}\text{ratio}\right)$

of 5 : 1.

According to the invention the precipitating agent is an aluminum polyhydroxychloride having the formula

$(AL_2OHCl_5)_n$;

in this case any recourse to a previous acidifying of the aqueous fiber suspension is eliminated. For the preparation of the aluminum polyhydroxychloride useful for the process of the invention, besides directly obtaining the compound with the desired Cl/OH ratio, the commercially available aluminum polyhydrochloride can be used, the correction to the optimum value of the Cl/OH ratio and thus of the chlorine content being carried out by admixing with hydrogen chloride.

The process of the invention has been compared with that using aluminum sulphate in the case of paper pulp for the preparation of extensible kraft paper having a weight of 78 g/m$^2$, the pulp comprising 20 % of raw cellulose and 80 % of waste paper pulp.

The pulp was added with 11 % of conventional size; in the first case 4,4 % of aqueous solution of aluminum sulphate was added, whereas in the second case 1,8 % of aqueous solution of aluminum polyhydroxychloride having a Cl/OH ratio of 5 : 1 was used.

In the following table the physical and mechanical properties of the resulting paper are reported:

|  | Aluminum sulphate | Aluminum polyhydroxychloride |
|---|---|---|
| Average tensile strength (N) | 46,4 | 52,2 |
| Average tearing length (m) | 4,049 | 4,548 |
| Average elongation (%) | 5,8 | 6,8 |
| Bursting strength (N/cm$^2$) | 33,6 | 34,9 |

In both cases the sizing is optimum, but it will be noted that the physical and mechanical properties are remarkably and unforeseably improved and, moreover, the amount of precipitating agent to the added to the suspension of fibers and sizing agent is relevantly reduced.

## Claim

A process for sizing paper wherein an aluminum polyhydroxychloride having the recurring units $Al_n(OH)_mCl_{3n\text{-}m}$ is added to an aqueous suspension of fibres and a colophony based sizing agent, characterised in that said aluminum polyhydroxychloride has a CL/OH ratio

$\left(\frac{3n\text{-}m}{m}\text{ratio}\right)$
at 5 : 1.

## Patentanspruch

Verfahren zum Leimen von Papier, bei dem ein Aluminiumpolyhydroxychlorid mit den Struktureinheiten $Al_n(OH)_mCl_{3n\text{-}m}$ zu einer wässrigen Suspension von Fasern und Leimungsmittel auf Kolophoniumbasis gegeben wird, dadurch gekennzeichnet, daß das Aluminiumpolyhydroxychlorid ein Cl/OH-Verhältis

$\left(\frac{3n\text{-}m}{m}\text{Verhältnis}\right)$
von 5 : 1 hat.

## Revendications

Un procédé pour l'encollage de papier dans lequel une polyhydroxychlorure de aluminium ayant des recurrentes unites de $Al_n(OH)_mCl_{3n\text{-}m}$ est ajonte à une suspension aqueous de fibres et d'un agent d'encollage, à base de collophane, caractérisé en ce que ledit polyhydroxychlorure de aluminium a un rapport Cl/OH

$\left(\text{rapport }\frac{3n\text{-}m}{m}\right)$
de 5 : 1.